(19) Europäisches Patentamt
European Patent Office
Office européen des brevets

(11) **EP 4 083 123 A1**

(12) **EUROPEAN PATENT APPLICATION**
published in accordance with Art. 153(4) EPC

(43) Date of publication:
**02.11.2022 Bulletin 2022/44**

(21) Application number: **20904319.9**

(22) Date of filing: **24.12.2020**

(51) International Patent Classification (IPC):
***C08J 9/04*** *(2006.01)*

(52) Cooperative Patent Classification (CPC):
**C08J 9/04**

(86) International application number:
**PCT/JP2020/048478**

(87) International publication number:
**WO 2021/132471 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2019 JP 2019238595**

(71) Applicant: **ENEOS Corporation**
**Chiyoda-ku**
**Tokyo 100-8162 (JP)**

(72) Inventors:
- **YAMAKI Kousuke**
  **Tokyo 100-8162 (JP)**
- **CHINO Keisuke**
  **Tokyo 100-8162 (JP)**

(74) Representative: **Müller-Boré & Partner Patentanwälte PartG mbB**
**Friedenheimer Brücke 21**
**80639 München (DE)**

# (54) FOAM MOLDING COMPOSITION AND FOAM MOLDED BODY

(57) A composition for foam molding comprising:
a component (A): an olefin-based polymer;
a component (B): a styrene block copolymer having no chemical-bond cross-linking moiety;
a component (C): a process oil; and
a component (D): a foaming agent, wherein a content of the component (A) relative to a total mass of the component (A) and the component (B) is 5 to 36% by mass, and a content of the component (C) relative to 100 parts by mass of the total mass of the component (A) and the component (B) is 160 to 350 parts by mass.

EP 4 083 123 A1

## Description

[Technical Field]

The present invention relates to a composition for foam molding and a foam molded article.

[Background Art]

Heretofore, studies on techniques for foaming various polymers to form foams have been in progress and use of thermoplastic elastomers as such polymers has also been proposed in recent years. For example, International Publication No. WO2017/159786 (PTL 1) discloses a composition for foam molding comprising at least one elastomer component selected from the group consisting of elastomeric polymers (A) each of which has a side chain containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below; an organically modified clay; and a foaming agent, wherein a content of the organically modified clay is 20 parts by mass or less relative to 100 parts by mass of the elastomer component. Such compositions for foam molding described in PTL 1 are applicable to various applications. However, even the compositions for foam molding described in PTL 1 have room for improvement to be superior compositions with which lower hardness and sufficiently suppressed stickiness of molded articles after foam molding can be achieved.

[Citation List]

[Patent Literature]

[PTL 1] International Publication No. WO2017/159786

[Summary of Invention]

[Technical Problem]

The present invention has been made in view of the problems in the related art, and has an object to provide a composition for foam molding capable of forming a foam molded article with lower hardness and stickiness sufficiently suppressed, and provide a foam molded article obtained by foam molding the composition.

[Solution to Problem]

The present inventors have conducted intensive studies to achieve the above-described object, and consequently have found that when a foam molded article is formed by foam-molding a composition for foam molding containing the following components (A) to (D), in which a content of the following component (A) relative to the total mass of the following component (A) and the following component (B) is 5 to 36% by mass, and a content of the following component (C) relative to 100 parts by mass of the total mass of the following component (A) and the following component (B) is 160 to 350 parts by mass, it is possible to achieve both softness and stickiness, which inherently have a trade-off relationship, at higher levels, and to form the foam molded article having lower hardness and stickiness sufficiently suppressed. These findings have led to the completion of the present invention.

Specifically, a composition for foam molding of the present invention comprises:

a component (A): an olefin-based polymer;
a component (B): a styrene block copolymer having no chemical-bond cross-linking moiety,
a component (C): a process oil; and
a component (D): a foaming agent, wherein
a content of the component (A) relative to a total mass of the component (A) and the component (B) is 5 to 36% by mass, and a content of the component (C) relative to 100 parts by mass of the total mass of the component (A) and the component (B) is 160 to 350 parts by mass. In addition, in the above composition for foam molding of the present invention, the component (A) preferably comprises
a component (A1): at least one component selected from the group consisting of polymers (I) each of which contains a main chain formed of an olefinic polymer and a side chain (a) containing a hydrogen-bond cross-linkable moiety having a carbonyl-containing group and/or a nitrogen-containing heterocycle and has a glass transition point of 25°C

or below, and polymers (II) each of which contains a main chain formed of an olefinic polymer and a side chain containing a hydrogen-bond cross-linkable moiety and a covalent-bond cross-linking moiety and has a glass transition point of 25°C or below, and

a component (A2): an α-olefin-based resin having no chemical-bond cross-linking moiety.

In the composition for foam molding of the present invention, the process oil is preferably a paraffin oil.

Moreover, the composition for foam molding of the present invention may further contain a component (E): an organically modified clay.

A foam molded article of the present invention is formed of a foam of the aforementioned composition for foam molding of the present invention.

[Advantageous Effects of Invention]

According to the present invention, it is possible to provide a composition for foam molding capable of forming a foam molded article having lower hardness and stickiness sufficiently suppressed and provide a foam molded article obtained by foam-molding the composition.

[Description of Embodiments]

Hereinafter, the present invention will be described in detail based on preferred embodiments thereof.

(Composition for Foam Molding)

A composition for foam molding of the present invention comprises:

a component (A): an olefin-based polymer;
a component (B): a styrene block copolymer having no chemical-bond cross-linking moiety,
a component (C): a process oil; and
a component (D): a foaming agent, wherein
a content of the component (A) relative to a total mass of the component (A) and the component (B) is 5 to 36% by mass, and a content of the component (C) relative to 100 parts by mass of the total mass of the component (A) and the component (B) is 160 to 350 parts by mass.

<Component (A): Olefine-Based Polymer>

The "olefine-based polymer" used as the component (A) in the above composition is not particularly limited and any known olefine-based polymer can be used as appropriate. As the component (A), preferable are the following component (A1) and the following component (A2):

[Component (A1)]

at least one component selected from the group consisting of polymers (I) each of which contains a main chain formed of an olefinic polymer and a side chain (a) containing a hydrogen-bond cross-linkable moiety having a carbonyl-containing group and/or a nitrogen-containing heterocycle and has a glass transition point of 25°C or below, and polymers (II) each of which contains a main chain formed of an olefinic polymer and a side chain containing a hydrogen-bond cross-linkable moiety and a covalent-bond cross-linking moiety and has a glass transition point of 25°C or below; and

[Component (A2)]

an α-olefin-based resin having no chemical-bond cross-linking moiety.

In addition, the component (A) more preferably contains the above component (A1) and the above component (A2). In other words, it is more preferable to use the above component (A1) and the above component (A2) in combination as the component (A). Hereinafter, the components (A1) and (A2) preferable as the component (A) will be described separately.

(Component (A1): At Least One Component Selected from Group Consisting of Polymers (I) and (II))

The component (A1) is at least one component selected from the group consisting of the aforementioned polymers (I) and (II). In each of the polymers (I) and (II), the "side chain" refers to a side chain and a terminal of the polymer. In addition, "a side chain containing a hydrogen-bond cross-linkable moiety having a carbonyl-containing group

and/or a nitrogen-containing heterocycle (hereinafter sometimes simply referred to as the "side chain (a)" for convenience)" means that a carbonyl-containing group and/or a nitrogen-containing heterocycle (more preferably a carbonyl-containing group and a nitrogen-containing heterocycle) serving as a hydrogen-bond cross-linkable moiety is chemically stably bonded (covalently bonded) to an atom (generally, a carbon atom) forming the main chain of the polymer. In addition, "a side chain containing a hydrogen-bond cross-linkable moiety and a covalent-bond cross-linking moiety" is a concept including a case where a side chain containing a hydrogen-bond cross-linkable moiety (hereinafter, sometimes referred to as the "side chain (a')" for convenience) and a side chain containing a covalent-bond cross-linking moiety (hereinafter, sometimes referred to as the "side chain (b)" for convenience) are contained, so that the polymer has the side chains containing both the hydrogen-bond cross-linkable moiety and the covalent-bond cross-linking moiety, as well as a case where a side chain containing both a hydrogen-bond cross-linkable moiety and a covalent-bond cross-linking moiety (a single side chain containing both a hydrogen-bond cross-linkable moiety and a covalent-bond cross-linking moiety therein: hereinafter, such a side chain is sometimes referred to as the "side chain (c)" for convenience) is contained, so that the polymer has the side chain containing both the hydrogen-bond cross-linkable moiety and the covalent-bond cross-linking moiety.

Moreover, the polymers (I) and (II) in the component (A1) preferably have elastomeric properties. Specifically, the component (A1) is preferably at least one component (elastomer component) selected from the group consisting of elastomeric polymers (preferable ones as the polymers (I)) each of which contains a main chain formed of an olefinic polymer and a side chain (a) containing a hydrogen-bond cross-linkable moiety having a carbonyl-containing group and/or a nitrogen-containing heterocycle and has a glass transition point of 25°C or below, and elastomeric polymers (preferable ones as the polymers (II)) each of which contains a main chain formed of an olefinic polymer and a side chain containing a hydrogen-bond cross-linkable moiety and a covalent-bond cross-linking moiety and has a glass transition point of 25°C or below. The "elastomeric polymer" mentioned herein may be any polymer that exhibits rubber elasticity at room temperature (25°C).

For the main chain of each of the polymers (I) and (II), used is an olefinic polymer having a glass transition point of room temperature (25°C) or below (more preferably an olefinic polymer having a glass transition point of room temperature (25°C) or below and having elastomeric properties). Here, the "olefinic polymer (olefine-based polymer)" mentioned herein refers to a polymer mainly composed of monomer units derived from one or more kinds of olefin monomers in which a portion composed of the monomer units is 80% by mass or more relative to the total mass of the olefine-based polymer. The olefine-based polymer may be a copolymer of one or more kinds of olefin monomers selected from the group consisting of $\alpha$-olefins, cyclic olefins, conjugated dienes, and non-conjugated dienes. The olefine-based polymer may be a copolymer of an olefin monomer selected from the aforementioned group and another monomer not belonging to the aforementioned group (non-olefinic monomer). Note that use of the olefinic polymers as the main chains of the polymers (I) and (II) makes it possible to sufficiently suppress degradation of the main chain portions and provide inexpensive elastomers. Examples of the polymers forming the main chains (the olefinic polymers forming the main chain portions) include olefin-based rubbers and polyolefin-based elastomeric polymers.

From the viewpoints that the hardness is made lower and closed cells are more likely to be formed in foam molding, the olefinic polymers forming the main chains of the polymers (I) and (II) as the component (A1) (more preferably olefinic polymers having elastomeric properties) are, among all, preferably ethylene-propylene rubber (EPM: ethylene-propylene copolymer), ethylene-butene rubber (EBM: ethylene-butene copolymer), ethylene-propylene-diene rubber (EPDM: ethylene-propylene-diene copolymer), and butyl rubber (IIR), more preferably EPM, EBM, and EPDM, and particularly preferably EBM.

As the component (A1), one of the aforementioned polymers (I) and (II) may be used alone or a mixture of two or more of them may be used. The glass transition points of the polymers (I) and (II) are 25°C or below as described above. In the present invention, the "glass transition point" is a glass transition point measured by differential scanning calorimetry (DSC). In the measurement, the rate of temperature rise is preferably set to 10°C/min.

As described above, each of the polymers (I) and (II) contains, as a side chain, at least one kind of: a side chain (a) containing a hydrogen-bond cross-linkable moiety having a carbonyl-containing group and/or a nitrogen-containing heterocycle; a side chain (a') containing a hydrogen-bond cross-linkable moiety and a side chain (b) containing a covalent-bond cross-linking moiety; and a side chain (c) containing a hydrogen-bond cross-linkable moiety and a covalent-bond cross-linking moiety. In the present invention, the side chain (c) may be referred to as a side chain that functions as both the side chain (a') and the side chain (b). Hereinafter, these side chains will be described.

<Side Chain (a): Side Chain Containing Hydrogen-Bond Cross-Linkable Moiety Having Carbonyl-Containing Group and/or Nitrogen-Containing Heterocycle>

The side chain (a) containing a hydrogen-bond cross-linkable moiety having a carbonyl-containing group and/or a nitrogen-containing heterocycle may be any side chain as long as it has a carbonyl-containing group and/or a nitrogen-containing heterocycle, and the other aspect of the structure is not particularly limited. The hydrogen-bond cross-linkable

moiety more preferably has both a carbonyl-containing group and a nitrogen-containing heterocycle.

The carbonyl-containing group is not particularly limited as long as it contains a carbonyl group. Specific examples thereof include amide, ester, imide, carboxy group, carbonyl group, and the like. The carbonyl-containing group may be a group introduced to the main chain (the polymer of the main chain portion) by using a compound capable of introducing a carbonyl-containing group to the main chain. The compound capable of introducing a carbonyl-containing group to the main chain is not particularly limited, and specific examples thereof include ketones, carboxylic acids, derivatives thereof, and the like. As the compound capable of introducing a carbonyl-containing group into the main chain such as carboxylic acids and derivatives thereof, any known compound (for example, the compounds described in paragraphs [0051] to [0053] in Japanese Patent No. 5918878 (JP 5918878 B) and so on) may be used as appropriate. As the compound capable of introducing a carbonyl group (carbonyl-containing group), cyclic acid anhydrides such as succinic anhydride, maleic anhydride, glutaric anhydride, and phthalic anhydride are preferable, and maleic anhydride is particularly preferable.

Meanwhile, when the side chain (a) has a nitrogen-containing heterocycle, the structure or the like of the nitrogen-containing heterocycle is not particularly limited as long as the nitrogen-containing heterocycle is introduced to the main chain directly or through an organic group. As the nitrogen-containing heterocycle, it is also possible to use a heterocycle containing therein a hetero atom other than a nitrogen atom, such as a sulfur atom, an oxygen atom, or a phosphorus atom, as long as the heterocycle contains a nitrogen atom. Here, use of the nitrogen-containing heterocycle in the side chain (a) is preferable because the presence of the heterocycle structure results in a stronger hydrogen bond that forms a cross-linkage, so that the obtained composition has an improved tensile strength. As the nitrogen-containing heterocycle, any known heterocycle (for example, the heterocycles described in paragraphs [0054] to [0067] of JP 5918878 B and so on) may be used as appropriate. The nitrogen-containing heterocycle may contain a substituent.

The nitrogen-containing heterocycle is preferably at least one selected from a triazole ring, an isocyanurate ring, a thiadiazole ring, a pyridine ring, an imidazole ring, a triazine ring, and a hydantoin ring each optionally containing a substituent, and is preferably at least one selected from a triazole ring, a thiadiazole ring, a pyridine ring, an imidazole ring, and a hydantoin ring each optionally containing a substituent. Examples of the substituent optionally contained in the nitrogen-containing heterocycle include a hydroxy group, a thiol group, an amino group, a carboxy group, an isocyanate group, an epoxy group, an alkoxysilyl group, and so on.

In addition, when the side chain (a) contains both the above carbonyl-containing group and the above nitrogen-containing heterocycle, the above carbonyl-containing group and the above nitrogen-containing heterocycle may be introduced to the main chain as side chains independent from each other, and are preferably introduced to the main chain as a single side chain in which the above carbonyl-containing group and the above nitrogen-containing heterocycle are linked to each other through another group. The structure of the side chain (a) may be a structure as described in paragraphs [0068] to [0081] of JP 5918878 B.

In addition, regarding the side chain (a), it is preferable to use a polymer (hereinafter sometimes referred to as the "olefine-based polymer having a cyclic acid anhydride group in a side chain" for convenience) in which a side chain of an olefinic polymer forming the main chain portion has a cyclic acid anhydride group as a functional group and to convert the side chain of the polymer into the side chain (a) in such a way that a hydrogen-bond cross-linkable moiety is formed in the side chain by reacting the cyclic acid anhydride group as the functional group with a compound that forms a hydrogen-bond cross-linkable moiety (a compound capable of introducing a nitrogen-containing heterocycle) upon a reaction with the cyclic acid anhydride group. The compound that forms a hydrogen-bond cross-linkable moiety (compound capable of introducing a nitrogen-containing heterocycle) may be the above nitrogen-containing heterocycle itself, or may be a nitrogen-containing heterocycle containing a substituent (for example, a hydroxy group, a thiol group, an amino group, or the like) that reacts with a cyclic acid anhydride group such as maleic anhydride.

<Side Chain (b): Side Chain Containing Covalent-Bond Cross-Linking Moiety>

The side chain (b) containing a covalent-bond cross-linking moiety means that a covalent-bond cross-linking moiety is chemically stably bonded (covalently bonded) to an atom (generally, a carbon atom) forming the main chain of a polymer (preferably an elastomeric polymer). The "covalent-bond cross-linking moiety" mentioned herein is a moiety which cross-links polymer molecules (more preferably elastomer molecules) to each other by a covalent bond. Here, the side chain (b) is a side chain containing a covalent-bond cross-linking moiety as described above. When the side chain (b) contains not only a covalent-bond cross-linking moiety but also a group capable of forming a hydrogen bond to form a cross-linkage by a hydrogen bond between side chains, the side chain (b) is used as the side chain (c) to be described later (note that, when both a hydrogen donor and a hydrogen acceptor, which allow the formation of a hydrogen bond between side chains of the polymer, are not contained, for example, when only side chains simply containing ester groups (-COO-) are present in the system, these groups do not function as the hydrogen-bond cross-linkable moiety because two ester groups (-COO-) do not form a hydrogen bond in particular. Meanwhile, for example, when each side chain of the polymer contain a structure having both a moiety serving as a hydrogen donor and a moiety serving as a

hydrogen acceptor in a hydrogen bond, such as a carboxy group and a triazole ring, a hydrogen bond is formed between the side chains of the polymers, and hence a hydrogen-bond cross-linkable moiety is contained. In addition, for example, when an ester group and a hydroxy group are coexistent in side chains of polymers, and these groups form a hydrogen bond between the side chains, the moiety forming the hydrogen bond serves as a hydrogen-bond cross-linkable moiety. For this reason, the side chain (b) may be used as the side chain (c) in some cases depending on the structure of the side chain (b) itself, the structure of the side chain (b) and the type of a substituent contained in another side chain, or the like).

The side chain (b) containing a covalent-bond cross-linking moiety is not particularly limited, but is preferably, for example, one containing a covalent-bond cross-linking moiety formed by a reaction of an olefinic polymer having a functional group in a side chain with a compound that forms a covalent-bond cross-linking moiety upon a reaction with the functional group (compound that forms a covalent bond). The cross-linkage at the covalent-bond cross-linking moiety of the side chain (b) is preferably formed by at least one bond selected from the group consisting of amide, ester, lactone, urethane, ether, thiourethane, and thioether. For this reason, the functional group of the olefinic polymer having a functional group in a side chain is preferably a functional group capable of forming at least one bond selected from the group consisting of amide, ester, lactone, urethane, ether, thiourethane, and thioether.

Examples of the "compound that forms a covalent-bond cross-linking moiety (compound that forms a covalent bond)" include: polyamine compounds having two or more amino and/or imino groups in one molecule (when both amino and imino groups are present, the total number of these groups is two or more); polyol compounds having two or more hydroxy groups in one molecule; polyisocyanate compounds having two or more isocyanate (NCO) groups in one molecule; polythiol compounds having two or more thiol groups (mercapto groups) in one molecule; and the like. The "compound that forms a covalent-bond cross-linking moiety (compound that forms a covalent bond)" herein is a compound capable of introducing both the hydrogen-bond cross-linkable moiety and the covalent-bond cross-linking moiety depending on the type of the substituent contained in the compound, the degree of the progress of a reaction in a case where the reaction is carried out by using the compound, or the like (for example, when a covalent-bond cross-linking moiety is formed by using a compound having three or more hydroxy groups, two of the hydroxy groups react with functional groups of an olefinic polymer having the functional groups in side chains, and the remaining one hydroxy group is left as the hydroxy group in some cases depending on the degree of the progress of the reaction, and in this case, a moiety that can form a hydrogen-bond cross-linkage can also be introduced). For this reason, the "compounds that each form a covalent-bond cross-linking moiety (compounds that each form a covalent bond) " also include "compounds that each form both a hydrogen-bond cross-linkable moiety and a covalent-bond cross-linking moiety." From such a viewpoint, in the case of forming the side chain (b), the side chain (b) may be formed by selecting a compound from the "compounds that each form a covalent-bond cross-linking moiety (compounds that each form a covalent bond)" according to a target design as appropriate, controlling the degree of the progress of the reaction as appropriate, or doing the like. Note that when the compound that forms a covalent-bond cross-linking moiety has a heterocycle, a hydrogen-bond cross-linkable moiety can be also produced together more efficiently. Therefore, it is possible to efficiently form a side chain having a covalent-bond cross-linking moiety as the side chain (c) to be described later. For this reason, especially together with the side chain (c), specific examples of the compound having a heterocycle will be described as preferred compounds for producing the side chain (c). Note that because of its structure, the side chain (c) can also be regarded as a preferred mode of side chains such as the side chain (a) and the side chain (b).

As the polyamine compound, the polyol compound, the polyisocyanate compound, or the polythiol compound usable as the "compound that forms a covalent-bond cross-linking moiety (compound that forms a covalent bond) ", any known compound (for example such as the compounds described in paragraphs [0094] to [0106] of JP 5918878 B) may be used as appropriate. The "compound that forms a covalent-bond cross-linking moiety (compound that forms a covalent bond)" is preferably polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), and polypropylene glycol stearylamine (for example, N,N-bis(2-methyl-2-hydroxyethyl)stearylamine).

The functional group (a functional group in an olefinic polymer containing the functional group in a side chain) which reacts with the "compound that forms a covalent-bond cross-linking moiety (compound that forms a covalent bond)" is preferably a functional group which can create (generate: form) at least one bond selected from the group consisting of amide, ester, lactone, urethane, thiourethane, and thioether. Preferred examples of such functional group include cyclic acid anhydride groups, hydroxy groups, amino groups, carboxy groups, isocyanate groups, thiol groups, and the like.

<Side Chain (c): Side Chain Containing Both Hydrogen-Bond Cross-Linkable Moiety and Covalent-Bond Cross-Linking Moiety>

The side chain (c) is a side chain containing both a hydrogen-bond cross-linkable moiety and a covalent-bond cross-linking moiety in the single side chain. The hydrogen-bond cross-linkable moiety contained in the side chain (c) is the same as the hydrogen-bond cross-linkable moiety described for the side chain (a'), and a preferred one thereof is the same as the hydrogen-bond cross-linkable moiety in the side chain (a). In addition, as the covalent-bond cross-linking moiety contained in the side chain (c), the same covalent-bond cross-linking moiety as that in the side chain (b) can be used (as the preferable cross-linkage, any of the same cross-linkages can be also used).

The side chain (c) is preferably a side chain formed by a reaction of an olefinic polymer having a functional group in a side chain with a compound that forms both a hydrogen-bond cross-linkable moiety and a covalent-bond cross-linking moiety upon a reaction with the functional group (compound that introduces both a hydrogen-bond cross-linkable moiety and a covalent-bond cross-linking moiety). The compound that forms both a hydrogen-bond cross-linkable moiety and a covalent-bond cross-linking moiety (compound that introduces both a hydrogen-bond cross-linkable moiety and a covalent-bond cross-linking moiety) is preferably a compound that has a heterocycle (particularly preferably a nitrogen-containing heterocycle) and is capable of forming a covalent-bond cross-linking moiety (compound that forms a covalent bond), and is more preferably, among all, a heterocycle-containing polyol, a heterocycle-containing polyamine, a heterocycle-containing polythiol, or the like. Note that, as the heterocycle-containing polyol, polyamine, or polythiol, it is possible to use, as appropriate, the same polyol, polyamine, or polythiol as described for the above "compound that is capable of forming a covalent-bond cross-linking moiety (compound that forms a covalent bond)" except that it contains a heterocycle (particularly preferably a nitrogen-containing heterocycle). As the heterocycle-containing polyol, polyamine, or polythiol, a known one (for example, ones described in paragraph [0113] of JP 5918878 B) may be used as appropriate. The functional group (functional group in an olefinic polymer containing the functional group in a side chain) which reacts with the "compound that forms both a hydrogen-bond cross-linkable moiety and a covalent-bond cross-linking moiety (compound that introduces both a hydrogen-bond cross-linkable moiety and a covalent-bond cross-linking moiety)" is preferably a functional group which can create (generate: form) at least one bond selected from the group consisting of amide, ester, lactone, urethane, thiourethane, and thioether. Preferred examples of such functional group include cyclic acid anhydride groups, hydroxy groups, amino groups, carboxy groups, isocyanate groups, thiol groups, and the like.

(Structures Preferred as Covalent-Bond Cross-Linking Moieties in Side Chains (b) and (c))

Regarding the side chains (b) and/or (c), it is preferable that the cross-linkage at the covalent-bond cross-linking moiety contain a tertiary amino bond (-N=) and/or an ester bond (-COO-), and that the binding site of such bond(s) also function as a hydrogen-bond cross-linkable moiety. When a tertiary amino bond (-N=) or an ester bond (-COO-) in a side chain containing a covalent-bond cross-linking moiety forms a hydrogen bond with another side chain as described above, the covalent-bond cross-linking moiety containing the tertiary amino bond (-N=) or the ester bond (-COO-) also comprises a hydrogen-bond cross-linkable moiety, and can function as the side chain (c).

Preferred examples of the compound that can form a covalent-bond cross-linking moiety containing the tertiary amino bond and/or the ester bond (compound capable of forming both a hydrogen-bond cross-linkable moiety and a covalent-bond cross-linking moiety) upon a reaction with the functional group of the olefinic polymer having the functional group in the side chain include polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), and polypropylene glycol stearylamine (for example, N,N-bis(2-methyl-2-hydroxyethyl)stearylamine).

The cross-linkage at the above covalent-bond cross-linking moiety in the side chain (b) and/or the side chain (c) is preferably one containing at least one structure represented by any one of the following general formulae (1) to (3), and is more preferably one in which G in the formulae contains a tertiary amino bond or an ester bond (note that when a structure shown below contains a hydrogen-bond cross-linkable moiety, the side chain containing the structure is used as a side chain (c)).

[Chem. 1]

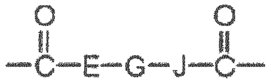

(1)

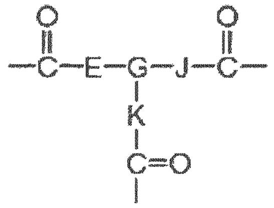

(2)

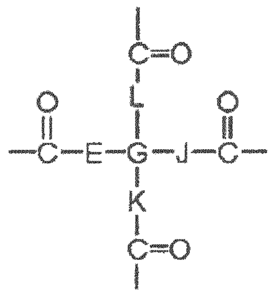

(3)

In the above general formulae (1) to (3), E, J, K, and L are each independently a single bond; an oxygen atom, an amino group NR' (where R' is a hydrogen atom or an alkyl group having 1 to 10 carbon atoms), or a sulfur atom; or an organic group optionally containing any of the atoms or groups, and G is a linear-chain, branched-chain, or cyclic hydrocarbon group having 1 to 20 carbon atoms and optionally containing an oxygen atom, a sulfur atom, or a nitrogen atom.

The substituents G are preferably groups represented by the following general formulae (111) to (114) and are more preferably the group represented by the following general formula (111) and the group represented by the following general formula (112).

[Chem. 2]

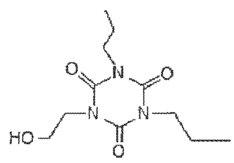

(111)

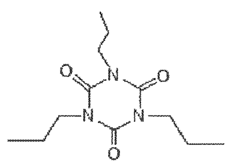

(112)

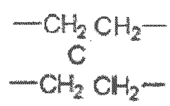

(113)

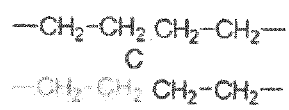

(114)

In addition, a cross-linkage at the above-described covalent-bond cross-linking moiety in each of the side chains (b) and (c) is preferably formed by a reaction of a cyclic acid anhydride group with a hydroxyl group or an amino group and/or an imino group. For example, when an olefinic polymer forming a main chain portion after the reaction has a cyclic acid anhydride group (for example, a maleic anhydride group) as a functional group in a side chain, the cross-linkage may be formed by a reaction of the cyclic acid anhydride group of the polymer with the compound that forms a covalent-bond cross-linking moiety having a hydroxy group or an amino group and/or an imino group (compound that forms a covalent bond), to form a moiety crosslinked by the covalent bond, thereby cross-linking polymer molecules.

The cross-linkage at the covalent-bond cross-linking moiety of each of the side chains (b) and (c) is more preferably formed by at least one bond selected from the group consisting of amide, ester, lactone, urethane, ether, thiourethane, and thioether.

Hereinabove, the side chain (a'), the side chain (a), the side chain (b), and the side chain (c) have been described. The groups (structures) and the like of the side chains in the polymers can be identified by ordinarily used analytic techniques such as NMR and IR spectrometry.

Note that a method for producing the component (A1) is not particularly limited and any known method may be used as appropriate (for example, when the component (A1) is the elastomer component, the method described in JP 5918878 B (the methods described in paragraphs [0139] to [0140]) may be employed as appropriate.

The component (A1) is preferably at least one selected from the group consisting of reaction products of:

an olefine-based polymer having a cyclic acid anhydride group in a side chain (more preferably an elastomeric olefine-based polymer having a cyclic acid anhydride group in a side chain); and

at least one cross-linking agent selected from triazoles optionally having at least one substituent selected from hydroxy groups, thiol groups, and amino groups, pyridines optionally having at least one substituent selected from hydroxy groups, thiol groups, and amino groups, thiadiazoles optionally having at least one substituent selected from hydroxy groups, thiol groups, and amino groups, imidazoles optionally having at least one substituent selected from hydroxy groups, thiol groups, and amino groups, isocyanurates optionally having at least one substituent selected from hydroxy groups, thiol groups, and amino groups, triazines optionally having at least one substituent

selected from hydroxy groups, thiol groups, and amino groups, hydantoins optionally having at least one substituent selected from hydroxy groups, thiol groups, and amino groups, tris(2-hydroxyethyl) isocyanurates, 2,4-diamino-6-phenyl-1,3,5-triazines, pentaerythritols, sulfamides, and polyether polyols. As described above, the component (A1) is preferably a reaction product of an olefine-based polymer having a cyclic acid anhydride group in a side chain and the cross-linking agent (more preferably a reaction product of the elastomeric olefine-based polymer having a cyclic acid anhydride group in a side chain and the cross-linking agent).

In the olefine-based polymer having a cyclic acid anhydride group in a side chain, the cyclic acid anhydride group is preferably a succinic anhydride group, a maleic anhydride group, a glutaric anhydride group, or a phthalic anhydride group, and is more preferably the maleic anhydride group from the viewpoints that the anhydride group can be easily introduced in a side chain of a polymer and is industrially readily available.

Then, from the viewpoint that the cross-linking agent is capable of forming a covalent-bond cross-linking moiety and a hydrogen-bond cross-linkable moiety simultaneously, preferable cross-linking agents are pyridines optionally having at least one substituent selected from hydroxy groups, thiol groups, and amino groups, thiadiazoles optionally having at least one substituent selected from hydroxy groups, thiol groups, and amino groups, imidazoles optionally having at least one substituent selected from hydroxy groups, thiol groups, and amino groups, isocyanurates optionally having at least one substituent selected from hydroxy groups, thiol groups, and amino groups, triazines optionally having at least one substituent selected from hydroxy groups, thiol groups, and amino groups, hydantoins optionally having at least one substituent selected from hydroxy groups, thiol groups, and amino groups, tris(2-hydroxyethyl) isocyanurates, 2,4-diamino-6-phenyl-1,3,5-triazines, pentaerythritols, sulfamides, and polyether polyols.

From the viewpoints that the hardness is made lower and closed cells are likely to be formed in foam molding, the component (A1) is more preferably a reaction product of an ethylene-butene rubber (EBM) having a cyclic acid anhydride group in a side chain and the cross-linking agent and is particularly preferably a reaction product of an ethylene-butene rubber (EBM) having a cyclic acid anhydride group in a side chain and tris(2-hydroxyethyl) isocyanurate.

(Component (A2): α-Olefin-Based Resin Having No Chemical-Bond Cross-Linking Moiety)

The component (A2) preferably used as the component (A) is an α-olefin-based resin having no chemical-bond cross-linking moiety. The "α-olefin-based resin" mentioned herein refers to a polymer which is mainly composed of monomer units derived from one or more kinds of olefins and in which a portion composed of the monomer units is 80% by mass or more relative to the total mass of the α-olefin-based resin. Moreover, the "α-olefin" mentioned herein refers to an alkene having a carbon-carbon double bond at the α position, and examples thereof include ethylene, propylene, 1-butene, 1-pentene, 1-hexene, 1-heptene, 1-octene, 1-nonene, 1-decene, and so on. The α-olefin-based resin may be a monopolymer of one kind of α-olefin or a copolymer of two or more kinds of α-olefins among the above α-olefins. In addition, the α-olefin-based resin may be a block copolymer or a random copolymer.

The "chemical-bond cross-linking moiety" mentioned herein refers to a moiety in which a cross-linkage is formed by a chemical bond such as a hydrogen bond, a covalent bond, a chelate formed between a metal ion and a polar functional group, and a bond formed by σ-π interaction in a metal-unsaturated bond (double bond, triple bond). Accordingly, "having no chemical-bond cross-linking moiety" mentioned herein means a state where a resin does not have a moiety where any chemical bond is formed such as a hydrogen bond, a covalent bond, a chelate formed between a metal ion and a polar functional group, or a bond formed by σ-π interaction in a metal-unsaturated bond (double bond, triple bond). As the α-olefin-based resin having no chemical-bond cross-linking moiety, preferably used is any of those described in paragraphs [0204] to [0214] of Japanese Unexamined Patent Application Publication No. 2017-57322.

The α-olefin-based resin having no chemical-bond cross-linking moiety is preferably polypropylene (PP), polyethylene (PE), ethylene-propylene copolymer (EPM), or ethylene-butene copolymer (EBM) from the viewpoint that it has a high compatibility with the component (A1) when used in combination with the component (A1). As the α-olefin-based resin having no chemical-bond cross-linking moiety, an α-olefin-based resin (such as polypropylene, ethylene-propylene copolymer, ethylene-butene copolymer, polyethylene, or polybutene) having a degree of crystallinity of 10% or more among all can be used preferably. A method for producing the α-olefin-based resin having no chemical-bond cross-linking moiety is not particularly limited, and any known method may be employed as appropriate. As the α-olefin-based resin, a commercially available product may be used. As the α-olefin-based resin having no chemical-bond cross-linking moiety, one kind of the resins may be used alone or two or more kinds of the resins may be used in combination.

The method for producing the α-olefin-based resin having no chemical-bond cross-linking moiety is not particularly limited, and any known method may be employed as appropriate. As the α-olefin-based resin, a commercially available product may be used, and examples of products usable as appropriate include: the trade names "TAFMER" and "HI-ZEX MILLION" manufactured by Mitsui Chemicals, Inc.; the trade names NOVATEC series of "NOVATEC HD", " NOVATEC LD", " NOVATEC LL", "KERNEL", "HARMOREX" and REXPEAR series of "REXPEAR ET", "REXPEAR EMA", and "REXPEAR EEA" manufactured by Japan Polyethylene Corporation; the trade names "HI-NEX", "NEO-ZEX", "ULTZEX", "Evolue", "Prime Polypro", "POLY FINE", "MOSTRON L", and "PRIME TPO" manufactured by Prime Polymer Co., Ltd.; PP manufactured by SunAllomer Ltd.; PE manufacture by Asahi Kasei Chemicals Corporation; PE manufactured by Ube Maruzen Polyethylene Co., Ltd.; PE and PP manufacture by Sumitomo Chemical Company, Limited; PE manufactured by Tosoh Corporation; PP manufactured by Japan Polypropylene Corporation; and the like.

(Component (A) Comprising Component (A1) and Component (A2))

In the case where the component (A) contains the components (A1) and (A2), the content of the component (A2) relative to 100 parts by mass of the component (A1) is preferably 20 to 100 parts by mass and particularly preferably 50 to 90 parts by mass from the viewpoint that closed cells are likely to be formed in foam molding while the flowability is improved simultaneously.

<Component (B): Styrene Block Copolymer Having No Chemical-Bond Cross-Linking Moiety>

The "styrene block copolymer having no chemical-bond cross-linking moiety" used as the component (B) is not particularly limited as long as it is a styrene block copolymer and has no chemical-bond cross-linking moiety, and a known one (for example, the copolymers described in paragraphs [0156] to [0163] of Japanese Unexamined Patent Application Publication No. 2017-57393 (JP 2017-57393 A)) can be used as appropriate. Here, the styrene block copolymer" mentioned herein just has to be a polymer having a styrene block structure in any moiety.

From the viewpoint that the copolymer is soft and capable of sufficiently absorbing and holding a process oil, preferable copolymers as the styrene block copolymer having no chemical-bond cross-linking moiety include a styrene-isoprene-styrene block copolymer (SIS), a styrene-ethylene-propylene-styrene block copolymer (SEPS), styrene-ethylene-ethylene-propylene-styrene block copolymer (SEEPS), a styrene-butadienestyrene block copolymer (SBS), a styrene-ethylenebutylene-styrene block copolymer (SEBS), a styrene-isoprene-butadiene-styrene block copolymer (SIBS), and products thereof generated by addition of hydrogen (so-called hydrogenated products). Among them, SEBS and SEEPS are more preferable and SEBS is particularly preferable. One of these styrene block copolymers may be used alone, or two or more thereof may be used in combination. As the styrene block copolymer, a commercially available product can be used as appropriate.

Then, as the styrene block copolymer having no chemical-bond cross-linking moiety, a styrene block copolymer is preferable in which the styrene content is 10 to 50% by mass (more preferably, 20 to 40% by mass) from the viewpoints of the mechanical strength and the oil absorption performance. Moreover, from the viewpoints of the mechanical strength and the oil absorption performance, the styrene block copolymer having no chemical-bond cross-linking moiety has a weight average molecular weight (Mw), a number average molecular weight (Mn), and a degree of dispersion of the molecular weight distribution (Mw/Mn) as follows: Mw is preferably 200,000 to 700,000, both inclusive, more preferably 300,000 to 600,000, both inclusive, and further preferably 350,000 to 550,000, both inclusive; Mn is preferably 100,000 to 600,000, both inclusive, more preferably 150,000 to 550,000, both inclusive, and further preferably 200,000 to 500,000, both inclusive; and Mw/Mn is preferably 5 or less and more preferably 1 to 3. From the viewpoint of the elastomeric properties, the glass transition point of the styrene block copolymer is preferably -80 to -30°C and more preferably -70 to -40°C. As a method for measuring the above properties (such as Mw and Mn), the method described in paragraphs [0156] to [0163] of JP 2017-57393 A is employed.

A method for producing the styrene block copolymer having no chemical-bond cross-linking moiety is not particularly limited and any known method can be employed as appropriate. As such a styrene block copolymer, a commercially available product may be used, and it is possible to use, as appropriate, any of copolymers: manufactured by Kraton Corporation under the trade names of "G1633", "G1640", "G1641", "G1642", "G1643", "G1645", "G1650", "G1651", "G1652", "G1654", "G1657", and "G1660"; manufactured by KURARAY CO., LTD. under the trade names of "S4055", "S4077", "S4099", "S8006", "S4044", "S8006", "S4033", "S8004", "S8007", and "S8076"; manufactured by Asahi Kasei Corporation under the trade names of "Tuftec H1041", "Tuftec N504", "Tuftec H1272", "Tuftec M1911", "Tuftec M1913", and "Tuftec MP10"; and manufactured by ARONKASEI CO., LTD. under the trade names of "AR-710", "AR-720", "AR-731", "AR-741", "AR-750", "AR-760", "AR-770", "AR-781", and "AR-791"; and the like, for example.

<Component (C): Process Oil>

The process oil used as the component (C) is not particularly limited, and any known process oil can be used as appropriate. Examples thereof include paraffin oils (paraffinic process oils), naphthene oils (naphthenic process oils), aroma oils (aromatic oils), and so on. As the process oil, a commercially available product can be used as appropriate.

Among these process oils, the paraffin oil is particularly preferable from the viewpoint that yellowing due to thermal deterioration can be suppressed at a higher level. The paraffin oil preferable as the process oil is not particularly limited and any known paraffin oil (for example, the paraffin oils described in paragraphs [0153] to [0157] of Japanese Unexamined Patent Application Publication No. 2017-57323 (JP 2017-57323 A) and the like) may be used as appropriate.

Here, when the paraffin oil is measured by correlation ring analysis (n-d-M ring analysis) according to ASTM D3238-85 to obtain a percentage of the number of paraffinic carbon atoms to the total number of carbon atoms (paraffin part: CP), a percentage of the number of naphthenic carbon atoms to the total number of carbon atoms (naphthene part:

CN), and a percentage of the number of aromatic carbon atoms to the total number of carbon atoms (aromatic part: CA), the percentage (CP) of the number of paraffinic carbon atoms to the total number of carbon atoms in the paraffin oil is preferably 60% or more. Moreover, from the viewpoints of the flowability and safety, the paraffin oil has a kinematic viscosity at 40°C of preferably 10 $mm^2/s$ to 700 $mm^2/s$, more preferably 20 to 600 $mm^2/s$, and further preferably 30 to 500 $mm^2/s$, where the kinematic viscosity at 40°C is measured according to JIS K 2283 (published in 2000). Further, from the viewpoints of the flowability and the safety, the paraffin oil has an aniline point of preferably 80°C to 145°C, more preferably 100 to 145°C, and further preferably 105 to 145°C, where the aniline point is measured by a U-tube method according to JIS K 2256 (published in 2013). The methods for measuring the above kinematic viscosity and aniline point, the methods described in paragraphs [0153] to [0157] of JP 2017-57323 A can be employed. A method for preparing the process oil is not particularly limited and any known method can be employed as appropriate. As the process oil, a commercially available product may be used.

<Component (D): Foaming Agent>

The "foaming agent" used as the component (D) is not particularly limited as long as it is capable of, when mixed with a material, generating gas by heating or the like, and thereby generating foam in a product (manufactured article). Known foaming agents can be used appropriately such as what are termed physical foaming agents, chemical foaming agent, and thermally expandable microcapsules.

Examples of the physical foaming agents include inorganic foaming agents such as nitrogen, air, carbon dioxide, ammonia, water (vapor), oxygen, hydrogen, and hollow glass balloons; and organic foaming agents such as pentane, dichloroethane, and chloro-fluorocarbon gas. One of these physical foaming agents may be used alone, or two or more thereof may be used in combination. When carbon dioxide or nitrogen is used as the physical foaming agent, it is preferable to mix the agent into the composition in the supercritical state from the viewpoints that it is possible to achieve rapid and uniform mixing while obtaining fine foam. A method of supercritical injection foam molding (conditions and others to be employed) is not particularly limited, and any known method can be employed as appropriate. For example, the method described in Japanese Unexamined Patent Application Publication No. H10-230528 may be used.

Meanwhile, examples of the chemical foaming agents include: inorganic compounds such as ammonium carbonate and sodium bicarbonate; organic compounds such as azo compounds, sulfohydrazide compounds, nitroso compounds, and azide compounds; and the like. As the azo compounds, there are azodicarbonamide (ADCA), azohexahydrobenzonitrile, 2,2-azoisobutyronitrile, diazoaminobenzene, and the like. As the sulfohydrazide compounds, there are benzenesulfohydrazide, benzene-1,3-disulfohydrazide, diphenyloxide-4,4-disulfohydrazide, diphenylsulfone-3,3-disulfohydrazide, and the like. Further, as the nitroso compounds, there are N,N-dinitrosopentaethylenetetramine (DNPT), N,N-dimethylterephthalate, and the like. As the azide compounds, there are terephthalazide and the like. When a chemical foaming agent is used as the foaming agent, the chemical foaming agent may be used in the form of a foaming agent master-batch in which a thermoplastic resin having a melting point lower than a decomposition temperature of the chemical foaming agent is used as a base material in order to uniformly disperse the chemical foaming agent more efficiently. The thermoplastic resin used as the base material is not particularly limited as long as it has a melting point lower than the decomposition temperature of the chemical foaming agent, and examples thereof include polystyrene (PS), polyethylene (PE), polypropylene (PP), and the like. As the foaming agent, a commercially available product may be used as appropriate.

Then, the thermally expandable microcapsules are not particularly limited and any known thermally expandable microcapsules can be used as appropriate. As the thermally expandable microcapsules, commercially available products may be used (for example, such as grade F and FN series of Matsumoto Microsphere (registered trademark) manufactured by Matsumoto Yushi-Seiyaku Co., Ltd. (for example, ultra-high temperature thermo-expandable type of F-170, F-190D, and the like) and MBF-190-EVA50 which is a master-batch in which these microcapsules are kneaded in a resin with good dispersion).

As the foaming agent, a physical foaming agent and a chemical foaming agent is preferable and a chemical foaming agent is more preferable from the viewpoints that it is inexpensive and is likely to form closed cells in injection molding.

< Composition>

The composition for foam molding of the present invention is a composition containing the component (A), the component (B), the component (C), and the component (D) .

In the composition for foam molding of the present invention, the content of the component (A) relative to the total mass of the component (A) and the component (B) (the total mass of the polymer components) is 5 to 36% by mass. When the content of the component (A) is less than the lower limit, it is not possible to obtain a composition having superior foam moldability because closed cells cannot be formed sufficiently in foam molding and a sufficiently high

expansion ratio cannot be achieved. On the other hand, when the content of the component (A) exceeds the upper limit, it is not possible to obtain a non-sticky molded article because of the difficulty in absorbing the process oil and holding it inside the molded article. From the viewpoints that it is possible to obtain a non-sticky molded article after foam molding, make the molded article softer, and also further improve the foam moldability of the obtained composition, the content of the component (A) relative to the total mass of the component (A) and the component (B) is more preferably 5 to 20% by mass and particularly preferably 5 to 10% by mass.

Moreover, in the composition for foam molding of the present invention, the total mass of the component (A) and the component (B) (the total mass of the polymer components) relative to the total mass of the composition for foam molding is preferably 15 to 40% by mass and more preferably 20 to 35% by mass. Further, in the composition for foam molding of the present invention, the content of the component (A) relative to the total mass of the composition for foam molding is preferably 0.5 to 20% by mass and more preferably 1 to 15% by mass from the viewpoints that it is possible to maintain the softness of a molded article and further improve the foam moldability.

In the composition for foam molding of the present invention, the content of the component (C) relative to 100 parts by mass of the total mass of the component (A) and the component (B) (the total mass of the polymer components) is 160 to 350 parts by mass. When the content of the component (C) is less than the lower limit, a molded article has insufficient softness. On the other hand, when the content of the component (C) exceeds the upper limit, a molded article has remarkable stickiness. Then, the content of the component (C) relative to 100 parts by mass of the total mass of the component (A) and the component (B) (the total mass of the polymer components) is more preferably 200 to 340 parts by mass and particularly preferably 260 to 320 parts by mass from the viewpoint that it is possible to achieve both the softness and non-stickiness of a molded article and further improve the foam moldability.

In addition, in the composition for foam molding of the present invention, the content of the component (D) relative to the total mass of the composition for foam molding is more preferably 0.2 to 15% by mass and particularly preferably 0.5 to 10% by mass from the viewpoints that it is possible to achieve a higher expansion ratio and obtain a more uniform foam molded article by improving the dispersibility of the foaming agent itself. From the same viewpoints, the content of the component (D) relative to 100 parts by mass of the total mass of the component (A) and the component (B) (the total mass of the polymer components) is preferably 0.5 to 30 parts by mass and more preferably 1.5 to 20 parts by mass.

In addition, the composition for foam molding of the present invention may further contain an organically modified clay (component (E)) from the viewpoints that closed cells are likely to be formed in foam molding and a more uniform foam molded article can be obtained. The organically modified clay is not particularly limited but is preferably a clay organically modified with an organically modifying agent. The organically modifying agent is not particularly limited, and any known organically modifying agent capable of organically modifying a clay (for example, the agents described in paragraph [0152] of JP 5918878 B) can be used as appropriate. As the organically modified clay, clay quaternary ammonium salts may be preferably used. As the clay quaternary ammonium salts, more preferably usable ones are dimethylstearylbenzylammonium salt, dimethyldioctadecylammonium salt, and a mixture of them, and a further preferably usable one is a mixture of dimethylstearylbenzylammonium salt and a dimethyldioctadecylammonium salt.

When the component (E) is contained, the content of the component (E) is not particularly limited, but is more preferably 0.001 to 0.1 parts by mass and particularly preferably 0.002 to 0.05 parts by mass relative to 100 parts by mass of the total mass of the component (A) and the component (B) (the total mass of the polymer components) from the viewpoint that the uniformity of a foam molded article can be further improved. From the same viewpoint, the content of the component (E) relative to 100 parts by mass of the component (A) is more preferably 0.01 to 0.5 parts by mass and particularly preferably 0.02 to 0.3 parts by mass. When the component (A) contains the component (A1) and the composition contains the component (E), the content of the component (E) relative to the component (A1) is preferably 0.01 to 10 parts by mass and more preferably 0.01 to 1 parts by mass relative to 100 parts by mass of the component (A1). When the content of the component (E) relative to the component (A1) is within the above range, the composition tends to achieve higher-level prevention of coloring and further improvement of the tensile strength after foam molding.

Moreover, the composition for foam molding of the present invention may further contain, as needed, various kinds of additives such as polymers other than the components (A) and (B), reinforcing agents (a type of bulking agent: for example, silica, carbon black, and so on), bulking agents to which amino groups are introduced, amino group-containing compounds other than the amino group-introduced bulking agents, compounds containing metal elements, anti-aging agents, antioxidants, pigments (dyes), plasticizers other than the above oils, thixotropy-imparting agents, ultraviolet absorbers, flame retardants, solvents, surfactants (including leveling agents), deodorants (such as baking soda), dispersing agents, dehydrating agents, rust inhibitors, tackiness imparting agents, antistatic agents, fillers, lubricants, slip agents, light stabilizers, conductivity imparting agents, antibacterial agents, neutralizing agents, softeners, bulking agents, colorants, and thermally conductive bulking agents. These additives are not particularly limited, and known additives (for example, those described in paragraphs [0169] to [0174] of JP 5918878 B and cited as examples in Japanese Unexamined Patent Application Publication No. 2006-131663 and the like) can be used as appropriate. The contents of the additives are not particularly limited but the content of each of the additives is preferably about 0.001

to 10 parts by mass relative to 100 parts by mass of the total mass of the component (A) and the component (B) (the total mass of the polymer components). When a lubricant is used from the viewpoint of the foam moldability, the content of the lubricant is preferably about 1 to 10 parts by mass relative to 100 parts by mass of the total mass of the component (A) and the component (B) (the total mass of the polymer components).

Using the composition for foam molding of the present invention, it is possible to form a foam molded article having lower hardness and stickiness sufficiently suppressed. In general, in the case of a soft polymer composition (for example, an elastomer having a surface hardness (type E hardness) of 25 or less), foaming of this polymer composition faces difficulty forming closed cells because the walls between bubbles are easily broken in the bubble growth process. For this reason, such a soft polymer composition is considered to be incapable of producing a desired foam because the composition fails to achieve a high expansion ratio when it is foamed, and forms a huge void when it is forcibly foamed at a high expansion ratio. From this viewpoint, heretofore, there has been a demand for the advent of a new composition for foam molding capable of molding a foam having sufficiently low surface hardness (type E hardness). Against this background, the above composition for foam molding of the present invention is capable of, when foam molded, obtaining a foam molded article containing closed cells while having sufficiently low surface hardness (type E hardness) and furthermore having sufficiently soft touch feeling.

Note that a method for producing the composition for foam molding of the present invention is not particularly limited, and any method capable of mixing the components (A) to (D) uniformly can be used as appropriate. Among the methods for producing the composition for foam molding of the present invention, a method for producing the composition for foam molding in which the component (A) contains a combination of the component (A1) and the component (A2) preferably employs, for example, a method (A) including:

a first step of mixing

an olefine-based polymer having a cyclic acid anhydride group in a side chain (hereinafter simply referred to as the "polymer (X)" for convenience),
at least one raw material compound of a compound (i) that forms a hydrogen-bond cross-linkable moiety upon a reaction with the cyclic acid anhydride group, and a mixed raw material of the compound (i) with a compound (ii) that forms a covalent-bond cross-linking moiety upon a reaction with the cyclic acid anhydride group,
the component (A2),
the component (B), and
the component (C),

thereby causing the polymer (X) to react with the raw material compound to obtain a thermoplastic polymer composition (more preferably a thermoplastic elastomer composition); and
a second step of adding the component (D) to the thermoplastic polymer composition to obtain a composition for foam molding. Hereinafter, the above method (A) will be briefly described.

The polymer (X) used in the first step is preferably a maleic anhydride-modified polymer that is a polymer in which the main chain is formed of an olefinic polymer, and is more preferably a maleic anhydride-modified elastomeric polymer in which the main chain is formed of an olefinic polymer (hereinafter, referred to as the "maleic anhydride-modified elastomeric polymer" for convenience). As the "maleic anhydride-modified elastomeric polymers" which can be preferably used as the polymer (X), maleic anhydride-modified ethylene-butene rubber, maleic anhydride-modified ethylene-propylene rubber, maleic anhydride-modified polyethylene, and maleic anhydride-modified ethylene-propylene rubber are more preferable.

As the polymer (X), any of commercially available products may be used. Examples thereof include: maleic anhydride-modified ethylene-propylene rubbers such as Nucrel (manufactured by DUPONT-MITSUI POLYCHEMICALS CO., LTD), Yukaron (manufactured by Mitsubishi Chemical Corporation), and TAFMER M (for example, MP0610 (manufactured by Mitsui Chemicals, Inc.), and MP0620 (manufactured by Mitsui Chemicals, Inc.)); maleic anhydride-modified ethylene-butene rubbers such as TAFMER M (for example, MA8510, MH7010, and MH7020 (manufactured by Mitsui Chemicals, Inc.), MH5010 and MH5020 (manufactured by Mitsui Chemicals, Inc.), and MH5040 (manufactured by Mitsui Chemicals, Inc.)); maleic anhydride-modified polyethylenes such as MODIC (manufactured by Mitsubishi Chemical Corporation); maleic anhydride-modified polypropylenes such as ADMER (for example, QB550 and LF128 (manufactured by Mitsui Chemicals, Inc.)); and the like.

The compound (i) used as the raw material compound is not particularly limited and any preferred compound can be selected and used among the compounds mentioned above as the compound (I) as appropriate depending on the type of the side chain (the side chain (a) or the side chain (a')) in the target polymer. From the viewpoint that the higher reactivity can be obtained, the compound (I) is preferably any of triazoles, pyridines, thiadiazoles, imidazoles, isocyanurates, triazines, and hydantoins each optionally having at least one substituent selected from hydroxy groups,

thiol groups, and amino groups. Examples of the triazoles, pyridines, thiadiazoles, imidazoles, isocyanurates, triazines, and hydantoins each optionally having the substituent include 4H-3-amino-1,2,4-triazole, aminopyridine, aminoimidazole, aminotriazine, aminoisocyanurate, hydroxypyridine, hydroxyethyl isocyanurate, and the like.

Meanwhile, as the compound (ii) that forms a covalent-bond cross-linking moiety upon a reaction with the cyclic acid anhydride group, any of the same compounds as the aforementioned "compound that forms a covalent-bond cross-linking moiety (compound that forms a covalent bond)" can be used preferably (compounds preferred as the compound are also the same). In addition, as the compound (ii), a compound that forms both a hydrogen-bond cross-linkable moiety and a covalent-bond cross-linking moiety (compound capable of simultaneously introducing both a hydrogen-bond cross-linkable moiety and a covalent-bond cross-linking moiety) may also be used. From the viewpoint of the high reactivity with the cyclic acid anhydride group, the compound (ii) is preferably tris(hydroxyethyl) isocyanurate (tris(2-hydroxyethyl) isocyanurate), sulfamide, or polyether polyol, more preferably tris(hydroxyethyl) isocyanurate or sulfamide, and further preferably tris(hydroxyethyl) isocyanurate.

Then, as the compounds (i) and/or (ii), it is preferable to use a compound that forms both of a hydrogen-bond cross-linkable moiety and a covalent-bond cross-linking moiety upon a reaction with the cyclic acid anhydride group (compound capable of simultaneously introducing both of a hydrogen-bond cross-linkable moiety and a covalent-bond cross-linking moiety), because both of the hydrogen-bond cross-linkable moiety and the covalent-bond cross-linking moiety can be introduced more efficiently to the composition. As the compound that forms both of a hydrogen-bond cross-linkable moiety and a covalent-bond cross-linking moiety, the aforementioned heterocycle-containing polyol, heterocycle-containing polyamine, and heterocycle-containing polythiol can be preferably used, and tris(hydroxyethyl) isocyanurate is particularly preferable among them.

In addition, from the viewpoint that the higher cross-linking density can be obtained, the amount of the raw material compound added is such that the total mass (when only one of the compounds (i) and (ii) is used, the mass of the one compound) is preferably 0.1 to 10 parts by mass, more preferably 0.3 to 7 parts by mass, and further preferably 0.5 to 5.0 parts by mass relative to 100 parts by mass of the polymer (X) in the mixture.

The method for mixing the components in the first step is not particularly limited and any of mixing methods using rolls, a kneader, an extruder, an all-purpose mixer, and the like can be employed. In the process of mixing the polymer (X); the raw material compound; the component (B); and the component (C), the order of adding the components is not particularly limited and other components (such as the component (E) and the above-described additives) may be mixed together as needed. Then, when the components are mixed by using rolls, a kneader, an extruder, an all-purpose mixer or the like in the first step, a lubricant may be used as appropriate.

Further, in the first step, a temperature condition for mixing the components is not particularly limited and may be adjusted as appropriate to a temperature at which the polymer (X) and the raw material compound can react with each other. From the viewpoint that the mixture can be softened to instantaneously cause the reaction, the temperature condition is preferably 100 to 250°C and more preferably 120 to 230°C. When the polymer (X) and the raw material compound react with each other as described above, it is possible to form the component (A1) (preferably the elastomer component). As a result, the thermoplastic polymer composition obtained in the first step contains: the component (A) containing the component (A1) and the component (A2); the component (B); and the component (C).

The form of the thermoplastic polymer composition (more preferably the thermoplastic elastomer composition) thus obtained in the first step is not particularly limited and may be any of various forms such as a pellet form, a vail form, a rod form, a ribbon form, or a sheet form obtained by appropriate molding or the like using a known apparatus such as a pelletizer. After the thermoplastic polymer composition (more preferably the thermoplastic elastomer composition) is thus prepared in the first step, the composition for foam molding is obtained by adding the component (D) to the thermoplastic polymer composition (second step).

The method for adding the component (D) in the second step is not particularly limited. For example, when the thermoplastic polymer composition is obtained in the pellet or powder form, it is possible to employ, as appropriate, a method such as a method for adding the foaming agent into the thermoplastic polymer composition by mixing the thermoplastic polymer composition with the component (D) in a dry-blend method. Instead, it is also possible to employ as appropriate a method such as a method including plasticizing the thermoplastic polymer composition in advance and adding the component (D) to the plasticized composition. The plasticizing method is not particularly limited and it is possible to employ as appropriate a method such as a kneading method using rolls, a kneader, a Banbury mixer, an extruder (such as a single or twin screw extruder), an all-purpose mixer, or the like at temperature at which the thermoplastic polymer composition can be plasticized (for example, about 100 to 250°C). The temperature condition for plasticizing the thermoplastic polymer composition as described above is not particularly limited and may be set as appropriate depending on the components in the composition. Here, as the temperature condition for plasticizing, it is preferable to employ a temperature at which the foaming agent does not generate gas when added to the plasticized thermoplastic polymer composition.

In the mixing for obtaining the composition for foam molding, the mixing just has to be done such that the foaming agent can be sufficiently dispersed. The method thereof is not particularly limited and any known method or the

like can be employed as appropriate. For example, it is possible to employ a mixing method by use of rolls, a kneader, a Banbury mixer, an extruder (such as a single or twin screw extruder), an all-purpose mixer, or the like.

The composition for foam molding of the present invention has been described hereinabove. Hereinafter, the foam molded article of the present invention will be described.

[Foam Molded Article]

The foam molded article of the present invention is formed of a foam of the above-described composition for foam molding of the present invention. More specifically, the foam molded article of the present invention is a molded article formed of a foam obtained by foaming the above-described composition for foam molding of the present invention.

A method for foaming the above-described composition for foam molding of the present invention is not particularly limited and any known method may be employed as appropriate depending on a type of a foaming agent. For example, it is possible to employ a method such as a method for foaming the above-described composition for foam molding of the present invention during extrusion using a single or twin screw extruder or the like, a method for foaming the composition for foam molding by heating press, and further a method for foaming the composition for foam molding while molding it by foam injection molding in a short shot method, a core back method, or the like.

In addition, the conditions for foaming the composition for foam molding (the foaming agent in the composition) are not particularly limited and may be adjusted depending on the type of the foaming agent and so on. It is possible to employ conditions necessary for foaming the used foaming agent as appropriate. Although the conditions for foaming the composition for foam molding (the foaming agent in the composition) are not particularly limited as described above, an atmosphere condition for foaming is preferably a gas atmosphere of air, an inert gas such as nitrogen, or a carbon dioxide gas (more preferably air) from the viewpoint that variations in the foamed state can be reduced. Then, a pressure condition for foaming the composition for foam molding (the foaming agent in the composition) is not particularly limited but is preferably 0.1 to 30 MPa and more preferably 0.2 to 20 MPa.

Further, in the case where the composition for foam molding (the foaming agent in the composition) is heated for foaming, a heating temperature is preferably 50 to 300°C and more preferably 60 to 250°C and a heating time is preferably 0.1 to 30 minutes and more preferably 0.3 to 20 minutes because the foaming agent can be more efficiently foamed.

A foam can be obtained by foaming the above-described composition for foam molding of the present invention (the foaming agent in the composition) as described above. Then, a foam molded article formed of the foam can be obtained by appropriately molding the shape of the foam into a sheet form, a solid form, or the like in the process of obtaining the foam as described above. The method for molding as described above is not particularly limited. For example, it is possible to employ a method such as a method for injection molding the composition for foam molding into a sheet form or a method for foaming the composition for foam molding inside a mold by using the mold shaped according to a desired shape. In the case of the molding using a mold, the molding may be performed by heating and pressing as needed.

The foam molded article of the present invention just has to be formed of a foam of the above-described composition for foam molding of the present invention, and may be, depending on an application, a molded article of the foam itself (such as a molded article obtained by foam molding the above-described composition for foam molding of the present invention or a molded article obtained by obtaining a foam through foaming of the above-described composition for foam molding of the present invention and thereafter molding the foam) or a structure formed of an appropriate combination of a molded article of the foam and another member (for example, a layered product). The foregoing other member is not particularly limited. Depending on an application or need, any known material (member) for use for the application can be used as appropriate.

Such a foam molded article of the present invention is preferably a molded article for a use in any application selected from the group consisting of civil engineering and construction materials, industrial parts, electric and electronic parts, and daily necessities. Having hardness sufficiently low and stickiness sufficiently suppressed, the foam molded article of the present invention is favorably usable for applications such as grip members for daily necessities (such as tooth brush or pen) and tools, shoe soles, and toys. Here, regarding these applications, brief description is given herein of a case where the foam molded article of the present invention is used for a grip member of a tooth brush. In a preferred example of this application, when a foam molded article of the present invention is provided, for example, covered over a hard material forming a portion of a grip portion of a handle (grip) of a tooth brush, the foam molded article of the present invention is used as the grip member of the tooth brush (in the case where a grip portion of a handle (grip) of a tooth brush includes a hard material and a soft material covering the hard material, use of the foam molded article of the present invention as the soft material makes it possible to form the tooth brush having the grip portion including a sufficiently soft and non-sticky foam molded article of the present invention).

[Examples]

Hereinafter, the present invention will be described more specifically on the basis of Examples and Comparative Examples; however, the present invention is not limited to Examples described below.

(Materials Used in Examples and Others)

First, the trade names and other information of materials (such as compounds) used in production of the compositions and so on in Examples and others described below are specified individually as (1) to (11). In Examples described below, the materials are expressed by the abbreviated names, the names, or the like listed herein.

(1) SEBS: styrene block copolymer (the trade name "G1633EU" manufactured by Kraton Corporation);
(2) Paraffin oil: the trade name "YU8J" manufactured by manufactured by JXTG Nippon Oil & Energy Corporation;
(3) Maleic EBM: maleic anhydride-modified ethylene-butene copolymer (the trade name "TAFMER MH5040" manufactured by Mitsui Chemicals, Inc.);
(4) EPM: $\alpha$-olefin-based resin (ethylene-propylene copolymer, the trade name "TAFMER DF7350" manufactured by Mitsui Chemicals, Inc.);
(5) Cross-linking agent: tris(hydroxyethyl) isocyanurate (the trade name of "TANAC P" manufactured by NISSEI CORPORATION);
(6) Filler: organically modified clay (the trade name "S-BEN WX" manufactured by HOJUN Co., Ltd.);
(7) Anti-aging agent: the trade name "AO-50" manufactured by ADEKA Corporation;
(8) Lubricant: polymer composite ester (the trade name "Loxiol G78" manufactured by Cognis Japan Ltd.);
(9) Deodorant: baking soda manufactured by Asahi Kasei Corporation;
(10) Foaming agent (a): foaming agent manufactured by EIWA CHEMICAL IND. CO., LTD. under the trade name "Polythlene EE106"; and
(11) Foaming agent (b): foaming agent manufactured by EIWA CHEMICAL IND. CO., LTD. under the trade name "Polythlene EE23C".

(Example 1)

First, 13.4 kg of the SEBS, 45 kg of the paraffin oil, 440 g of the maleic EBM, 330 g of the EPM, 178 g of the anti-aging agent, 12 g of the cross-linking agent (tris(hydroxyethyl) isocyanurate), 0.44 g of the filler (organically modified clay), 0.44 g of the deodorant (baking soda), and 592 g of the lubricant were measured and prepared, and then these materials were put into a pressurized kneader (the trade name "WDX75-200" manufactured by Moriyama Co Ltd.) and kneaded at 150°C for 20 minutes to obtain a thermoplastic elastomer composition. Next, the obtained thermoplastic elastomer composition was extruded with a single screw extruder and the extruded composition was formed into elastomer pellets by using a pelletizer.

Subsequently, the foaming agent (a) was added to the obtained elastomer pellets, followed by dry blending to obtain a composition for foam molding. The amount of the foaming agent (a) used was set to such an amount that the content of the foaming agent in the composition for foam molding was 3% by mass. Then, the composition for foam molding was put into a hopper of an injection molding machine, and was molded (injection molded) by a short shot method to obtain a foam sheet with 100 mm × 100 mm × a thickness of 4 mm. In this way, the foam sheet (the foam molded article formed of the foam of the composition for foam molding) was obtained. As conditions for injection molding, conditions of an injection temperature: 230°C, a mold temperature: 40°C, and a cooling time: 30 seconds were employed. Table 1 shows the usage ratio and other information on each material used to prepare the foam sheet described above.

(Example 2)

A composition for foam molding was obtained and then was injection molded to obtain a foam sheet (foam molded article), in the same way as in Example 1 except that the type of the foaming agent was changed from the foaming agent (a) to the foaming agent (b) and the injection temperature in the injection molding was changed from 230°C to 190°C. Table 1 shows the usage ratio and other information on each material used to prepare the foam sheet as described above.

(Example 3 and Comparative Examples 1 to 4)

A composition for foam molding was obtained and then was injection molded to obtain a foam sheet (foam molded article), in the same way as in Example 1 except that the amounts of the maleic EBM, the cross-linking agent,

the EPM, the SEBS, the paraffin oil, the filler, the anti-aging agent, the lubricant, the deodorant, and the foaming agent used were changed such that the contents of these materials were in a ratio specified in Table 1. In Comparative Examples 1 and 3, despite the attempt to mold (injection mold) a foam sheet after the composition for foam molding was obtained as described above, the foam molding (injection molding) was failed because the elastomer pellets used in the production of the composition for foam molding were too soft to bite into the screw of the injection molding machine (the pellets in Comparative Example 3 were even sticky). For this reason, in Comparative Examples 1 and 3, the foam sheets failed to be produced.

[Table 1]

| | Kinds of Components and Others | | | Ex. 1 | Ex. 2 | Ex. 3 | Comp. Ex. 1 | Comp. Ex. 2 | Comp. Ex. 3 | Comp. Ex. 4 |
|---|---|---|---|---|---|---|---|---|---|---|
| Constitution of Main Materials*1 in Each Composition [Unit: % by mass] | Component (A) | (A1)*2 | Maleic EBM | 3.1 | 3.1 | 19.9 | 2.8 | 20.9 | 3.10 | 3.10 |
| | | | Cross-Linking Agent (Tris (hydroxyethyl) isocyanurate) | 0.08 | 0.08 | 0.52 | 0.076 | 0.6 | 0.08 | 0.08 |
| | | (A2) | EPM (α-Olefin-Based Resin) | 2.33 | 2.33 | 14.92 | 1.79 | 15.7 | 2.33 | 2.33 |
| | Component (B) | | SEBS | 94.49 | 94.49 | 64.66 | 95.33 | 62.8 | 94.49 | 94.49 |
| | Total Mass of Component (A) and (B) | | | 100 | 100 | 100 | 100 | 100 | 100 | 100 |
| | Total Mass of Component (A) (Total Mass of Component (A1) and Component (A2)) | | | 5.51 | 5.51 | 35.34 | 4.67 | 37.2 | 5.51 | 5.51 |
| | Total of Components (A) and (B) | | Total of Olefin-Based Polymer and Styrene Block Copolymer | 100 | 100 | 100 | 100 | 100 | 100 | 100 |
| | Component (C) | | Paraffin Oil | 317 | 317 | 209 | 317 | 209 | 360 | 150 |
| Content Ratio of Components in Elastomer Pellets | Component (E) | | Filler (Organically Modified Clay) | 0.003 | 0.003 | 0.02 | 0.003 | 0.021 | 0.003 | 0.003 |
| Prepared in Examples [Unit: parts by mass] | Additives | | Anti-Aging Agent | 1.3 | 1.3 | 0.925 | 1.3 | 0.93 | 1.3 | 1.3 |
| | | | Lubricant | 4.2 | 4.2 | 3.09 | 4.2 | 3.10 | 4.2 | 4.2 |
| | | | Deodorant (Baking Soda) | 0.003 | 0.003 | 0.021 | 0.003 | 0.021 | 0.003 | 0.003 |

(continued)

| | Kinds of Components and Others | Ex. 1 | Ex. 2 | Ex. 3 | Comp. Ex. 1 | Comp. Ex. 2 | Comp. Ex. 3 | Comp. Ex. 4 |
|---|---|---|---|---|---|---|---|---|
| About Component (D) in Compositions for Foam Molding Prepared in Examples (about Foaming Agent) | Type of Foaming Agent | Foaming Agent (a) | Foaming Agent (b) | Foaming Agent (a) | Foaming Agent (a) | Foaming Agent (a) | Foaming Agent (a) | Foaming Agent (a) |
| | Content Ratio of Foaming Agent to Total Mass of Composition For Foam Molding (% by mass) | 3 | 3 | 3 | 3 | 3 | 3 | 3 |

In Table, *1 indicates that the "main material" is a polymer component containing the component (A) and the component (B) (the "component (A)" is an olefin-based polymer containing the component (A1) and the component (A2); and *2 indicates that the "component (A1)" is a reaction product (elastomer component) of the maleic EBM and the cross-linking agent.

(Evaluation of Properties of Foam Sheets Obtained in Examples 1 to 3, Comparative Example 2, and Comparative Example 4)

<Measurement of Expansion Ratio>

The expansion ratio was obtained by measuring the specific gravities before and after formation of the foam sheet (foam molded article) (the specific gravity of the composition for foam molding (pl[-]) and the specific gravity of the foam molded article (ρ2[-])) and calculating the following formula:

[Expansion Ratio] = [Specific Gravity of Composition for Foam Molding (ρ1)]/[Specific Gravity of Foam Molded Article (ρ2)].

Here, the specific gravities before and after formation of the foam sheet (the specific gravities of the composition for foam molding and the foam molded article) were measured by an electronic densimeter (the trade name of "SD-200L" manufactured by Alfa Mirage Co., Ltd.). Table 2 shows the obtained results.

<Measurement of Surface Hardness: Measurement of Type E Hardness>

The surface hardness (type E hardness) of the foam sheet was obtained in accordance with JIS K6253-3 (published in 2012) by: performing measurements at 5 points on the surface of the foam sheet (foam molded article) by use of a type E durometer (a durometer E hardness tester: the trade name "GS-680sel" available from Sato Shoji Corp.) ; and calculating an average value of the measured values. Table 2 shows the obtained results.

In addition, using the elastomer pellets in each of Examples and others, a sheet with a thickness of 4 mm was molded by a hot pressing machine at 200°C, and the type E hardness of the obtained elastomer sheet (unfoamed) was measured in the same way as in the foam sheet. Table 2 shows the results of this measurement together.

<Evaluation of Stickiness (Sensory Evaluation Test by Five Panelists)>

The stickiness of each foam sheet was evaluated in such a way that five panelists each gave a score based on the following evaluation criteria after touching the foam sheet (foam molded article: 100 mm × 100 mm × 4 mm), and the average value of the scores by the five panelists was calculated. In this way, the stickiness of the foam sheet obtained in each of Examples and others was determined as the average value of the scores given by the five panelists. In this evaluation, as is apparent from the following evaluation criteria, a lower score (average value) indicates less stickiness and better touch feeling. In particular, in the case where the average value of the scores given by the five panelists is less than 2, the foam sheet is considered to achieve a higher level of suppression of the stickiness.

<Evaluation Criteria (Stickiness)>

1 point: The surface was dry to the touch and no stickiness was felt.
2 points: Slight stickiness was felt.
3 points: Stickiness was felt.
4 points: Strong stickiness was felt.
5 points: Very strong stickiness was felt and the sticky feeling was left on the hand even after the hand stopped touching the object.

<Evaluation of Softness (Sensory Evaluation Test by Five Panelists)>

The softness of each foam sheet was evaluated in such a way that five panelists each gave a score based on the following evaluation criteria after touching the foam sheet (foam molded article: 100 mm × 100 mm × 4 mm) , and the average value of the scores of the five panelists was calculated. In this evaluation, assuming that the foam molded article was used for a grip portion of a pen, the panelists each gave a score in accordance with the following evaluation

criteria in terms of whether the foam molded article was lower in hardness than a grip portion of a general pen. In this evaluation, a higher score indicates higher softness and better touch feeling. In the case where the average value of the scores given by the five panelists is 4 or more, the foam molded article is considered to have a sufficiently high level of softness.

<Evaluation Criteria (Softness)>

1 point: The article was felt hard as a grip portion.

2 points: The article was felt neither hard nor soft but quite usual as a grip portion.

3 points: The article was felt soft as a grip portion.

4 points: The article was felt very soft as a grip portion.

5 points: The article has softness at a level that had never been touched as a grip portion and was surprising at the moment of touching it.

[Table 2]

| | Ex. 1 | Ex. 2 | Ex. 3 | Comp. Ex. 1 | Comp. Ex. 2 | Comp. Ex. 3 | Comp. Ex. 4 |
|---|---|---|---|---|---|---|---|
| Expansion Ratio of Foam Sheet [fold] | 1.3 | 1.2 | 1.5 | Not Measurable | 1.5 | Not Measurable | 1.5 |
| Surface Hardness of Foam Sheet [-] (Type E Hardness) | 12 | 12 | 22 | Not Measurable | 26 | Not Measurable | 26 |
| Scored Result of "Stickiness" [points] (Average Score of 5 Panelists) | 1.8 | 1.6 | 1.4 | Not Measurable | 1.4 | Not Measurable | 1.4 |
| Scored Result of Softness [points] (Average Score of 5 Panelists) | 4.8 | 4.6 | 4.0 | Not Measurable | 3.0 | Not Measurable | 3.0 |
| Surface Hardness of Sheet (Unfoamed) Formed from Elastomer Pellets [-] (Type E Hardness) | 12 | 12 | 22 | 8 | 26 | 7 | 26 |

As is apparent from the results shown in Table 2, in each of Examples 1 to 3, even though the sheet (unfoamed) obtained from the elastomer pellets was very soft having low surface hardness (type E hardness) of 25 or less, the foam molded article at an expansion ratio of 1.2-fold or higher was obtained with the composition for foam molding obtained by using the elastomer pellets. As a result of observation of the cross sections of the foam sheets obtained in Examples 1 to 3 with a scanning electron microscope (SEM), closed cells were formed in all of these foam sheets. These results confirm that according to the present invention, it is possible to obtain a foam in which closed cells are formed by using, as a material, a very soft elastomer having surface hardness (type E hardness) of 25 or less.

Moreover, as is apparent from the results shown in Table 2, all the foam sheets (the foamed molded articles formed of the foams of the compositions for foam molding) obtained in Examples 1 to 3 had surface hardness (type E hardness) of 22 or less, whereas the foam sheets obtained in Comparative Examples 2 and 4 had surface hardness of 26 or more. This result demonstrate that the use of the compositions for foam molding obtained in Examples 1 to 3 makes it possible to achieve the surface hardness (type E hardness) of 25 or less and accordingly achieve a lower value of the hardness based on the surface hardness (type E hardness) .

In addition, as is apparent from the results of the evaluation test (sensory test) of the softness by the five panelists, also in the touch feeling, the foam sheets obtained in Examples 1 to 3 were found to have the higher average values of the scores and be felt softer than the foam sheets obtained in Comparative Examples 2 and 4. Here, when the foam sheet obtained in Example 3 and the foam sheets obtained in Comparative Examples 2 and 4 are compared in terms of the results shown in Table 2, it is considered that the results have a great difference in the softness in the

tough feeling (sensory evaluation). The present inventors reason that since the sheet in Example 3 with uniform closed cells formed therein is capable of greatly changing in thickness with a weaker force when being touched, there is a difference in touch feeling that cannot be indicated by the surface hardness tester with a shallow indentation length of the indenter.

Moreover, as is apparent from the results shown in Table 2, all the foam sheets obtained in Example 1 to 3, Comparative Example 2 and Comparative Example 4 for which the average values of the scores given by the five panelists were less than 2 were found to have stickiness suppressed at high levels.

These results reveal that the foam sheets obtained in Examples 1 to 3 have the stickiness suppressed at sufficiently high levels while having the lower hardness based on the surface hardness (type E hardness). From the constitutions shown in Table 1, the results shown in Table 2, and so on, it was found that the content of the component (A) relative to the total mass of the component (A) and the component (B) in the composition for foam molding has to be at least 5% by mass or more in order to produce a foam (foam molded article) because the compositions for foam molding obtained in Examples 1 to 3 were capable of molding the foam sheets having the lower hardness while the elastomer pellets in Comparative Example 1 were even too soft to be injection molded. As a result of comparison of Example 3 with Comparative Example 2, it was also found that the case where the content of the component (A) relative to the total mass of the component (A) and the component (B) exceeded 36% by mass (Comparative Example 2) resulted in surface hardness (type E hardness) of 26 and failed to achieve surface hardness of 25 or less.

Moreover, additionally considering findings such as that the use of the composition obtained in Comparative Example 3 (the content of the component (C) relative to 100 parts by mass of the total mass of the component (A) and the component (B) is 360 parts by mass) resulted in a failure to perform injection molding using the composition (the elastomer pellets were too soft and sticky to be injection molded) and that the use of the composition obtained in Comparative Example 4 (the content of the component (C) relative to 100 parts by mass of the total mass of the component (A) and the component (B) is 150 parts by mass) resulted in a higher value of the surface hardness of the foam sheet than in the case of using the composition for foam molding obtained in Example 1 (the content of the component (C) relative to 100 parts by mass of the total mass of the component (A) and the component (B) is 317 parts by mass), it was also found that the content of the paraffin oil (the component (C)) relative to 100 parts by mass of the total mass of the component (A) and the component (B) has to be at least 160 to 350 parts by mass from the viewpoint that a foam molded article having lower hardness and stickiness sufficiently suppressed can be formed.

[Industrial Applicability]

According to the present invention, it is possible to provide a composition for foam molding capable of forming a foam molded article with lower hardness and stickiness sufficiently suppressed and a foam molded article obtained by foam molding the composition as described above. Since foam molded articles of the present invention can have lower hardness without stickiness, the foam molded articles are favorably applicable to grip members or the like for daily necessities (such as tooth brush) and tools and so on.

## Claims

**1.** A composition for foam molding comprising:

a component (A): an olefin-based polymer;
a component (B): a styrene block copolymer having no chemical-bond cross-linking moiety;
a component (C): a process oil; and
a component (D): a foaming agent, wherein
a content of the component (A) relative to a total mass of the component (A) and the component (B) is 5 to 36% by mass, and
a content of the component (C) relative to 100 parts by mass of the total mass of the component (A) and the component (B) is 160 to 350 parts by mass.

**2.** The composition for foam molding according to claim 1, wherein
the component (A) comprises:

a component (A1): at least one component selected from the group consisting of polymers (I) each of which contains a main chain formed of an olefinic polymer and a side chain (a) containing a hydrogen-bond cross-linkable moiety having a carbonyl-containing group and/or a nitrogen-containing heterocycle and has a glass transition point of 25°C or below, and polymers (II) each of which contains a main chain formed of an olefinic

polymer and a side chain containing a hydrogen-bond cross-linkable moiety and a covalent-bond cross-linking moiety and has a glass transition point of 25°C or below; and
a component (A2):an α-olefin-based resin having no chemical-bond cross-linking moiety.

**3.** The composition for foam molding according to claim 1 or 2, wherein
the process oil is a paraffin oil.

**4.** The composition for foam molding according to any one of claims 1 to 3 further comprising a component (E): an organically modified clay.

**5.** A foam molded article formed of a foam of the composition for foam molding according to any one of claims 1 to 4.

## INTERNATIONAL SEARCH REPORT

International application No.
PCT/JP2020/048478

A. CLASSIFICATION OF SUBJECT MATTER
C08J 9/04(2006.01)i
FI: C08J9/04 CET
According to International Patent Classification (IPC) or to both national classification and IPC

B. FIELDS SEARCHED
Minimum documentation searched (classification system followed by classification symbols)
C08J9/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2017/159786 A1 (JX ENERGY CORPORATION) 21 September 2017 (2017-09-21) claims, paragraphs [0181]-[0216], examples | 1-5 |
| X | JP 2002-363344 A (JSR CORPORATION) 18 December 2002 (2002-12-18) claims, paragraphs [0031]-[0033]-[0058] | 1, 3-5 |
| X | JP 7-18106 A (MITSUBISHI YUKA KABUSHIKI KAISHA) 20 January 1995 (1995-01-20) claims, paragraphs [0008]-[0011], examples | 1, 3-5 |
| X | JP 2003-39448 A (TOAGOSEI CO., LTD.) 13 February 2003 (2003-02-13) claims, paragraphs [0012]-[0015], [0020], examples | 1, 3-5 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 March 2021 (15.03.2021) | 06 April 2021 (06.04.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/048478

C (Continuation). DOCUMENTS CONSIDERED TO BE RELEVANT

| Category* | Citation of document, with indication, where appropriate, of the relevant passages | Relevant to claim No. |
|---|---|---|
| X | JP 2002-20522 A (KANEGAFUCHI CHEM IND CO., LTD.) 23 January 2002 (2002-01-23) claims, paragraphs [0031]-[0035], examples | 1, 3-5 |

Form PCT/ISA/210 (continuation of second sheet) (January 2015)

**INTERNATIONAL SEARCH REPORT**
Information on patent family members

International application No.
PCT/JP2020/048478

| Patent Documents referred in the Report | Publication Date | Patent Family | Publication Date |
|---|---|---|---|
| WO 2017/159786 A1 | 21 Sep. 2017 | US 2019/0085146 A1 claims, paragraphs [0187]-[0222], examples | |
| JP 2002-363344 A | 18 Dec. 2002 | US 2004/0067380 A1 claims, paragraphs [0067]-[0106] | |
| JP 7-18106 A | 20 Jan. 1995 | (Family: none) | |
| JP 2003-39448 A | 13 Feb. 2003 | (Family: none) | |
| JP 2002-20522 A | 23 Jan. 2002 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017159786 A
- JP 5918878 B
- JP 2017057322 A
- JP 2017057393 A
- JP 2017057323 A
- JP H10230528 A
- JP 2006131663 A